(19) Europäisches Patentamt
European Patent Office
Office européen des brevets

(11) **EP 3 613 164 B1**

(12) **EUROPEAN PATENT SPECIFICATION**

(45) Date of publication and mention
of the grant of the patent:
**16.11.2022 Bulletin 2022/46**

(21) Application number: **17720797.4**

(22) Date of filing: **03.05.2017**

(51) International Patent Classification (IPC):
**H04L 1/18** $^{(2006.01)}$     **H04L 1/16** $^{(2006.01)}$
**H04L 1/00** $^{(2006.01)}$

(52) Cooperative Patent Classification (CPC):
**H04L 1/1809;** H04L 1/1678; H04L 1/1874;
H04L 2001/0097

(86) International application number:
**PCT/EP2017/060455**

(87) International publication number:
**WO 2018/202282 (08.11.2018 Gazette 2018/45)**

(54) **DEVICE AND METHOD FOR MONITORING A TCP CONNECTION**

VORRICHTUNG UND VERFAHREN ZUR ÜBERWACHUNG EINER TCP-VERBINDUNG

DISPOSITIF ET PROCÉDÉ DE SURVEILLANCE D'UNE CONNEXION TCP

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.02.2020 Bulletin 2020/09**

(73) Proprietor: **Huawei Technologies Co., Ltd.**
**Longgang District**
**Shenzhen, Guangdong 518129 (CN)**

(72) Inventors:
• **DRORI, Nir**
**80992 Munich (DE)**
• **PECHTALT, Itzcak**
**80992 Munich (DE)**
• **ALMOG, Guy**
**80992 Munich (DE)**
• **SHARGIL, Ido**
**80992 Munich (DE)**
• **HUANG, Zhigang**
**80992 Munich (DE)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**US-A1- 2005 068 896**     **US-A1- 2006 221 825**
**US-B1- 6 553 032**

**Description**

TECHNICAL FIELD

The present invention relates to a device for monitoring a Transmission Control Protocol (TCP) connection between a transmitting device and a receiving device. Accordingly, the device is also referred to as a TCP monitoring device. The present invention also relates to a corresponding method for monitoring a TCP connection between a transmitting device and a receiving device.

BACKGROUND

Reliable data link layers, such as 802.11 Wi-Fi, Power Line Communication (PLC), 3GPP Mobile, or Data-Over-Cable Service Interface Specifications (DOCSIS) 3.1, conventionally use an Automatic Repeat-request (ARQ) mechanism to provide reliable data transfer. In particular, the following different ARQ modes are known.

Stop and wait ARQ: This is the simplest mode of ARQ, where a transmitter sends one frame at a time, and waits for a receiver to send an Acknowledgement (ACK). In case of a missing ACK, the frame is retransmitted.

Go-Back-N ARQ: In this mode, the transmitter sends a group of frames with sequence numbers. Upon receiving the last frame, the receiver requests retransmission of frames starting from a frame that has been lost. This mode is not efficient in a high noise environment, such as wireless and Wi-Fi, because of the need to retransmit not only the lost frame, but also all subsequent ones.

Selective Repeat ARQ: In this mode of operation, the transmitter sends a group of frames in an agreed window, and the receiver asks only for retransmission of lost frames.

TCP is a reliable transport protocol, which also relies on an ACK indication from a receiver to a transmitter. At TCP connection setup, these two end points agree on a datagram window size. The TCP transmitter uses a congestion window, which grows exponentially upon each ACK from the receiver (Slow Start), until there is a packet loss indication. TCP treats any packet loss event as an indication of network congestion, and accordingly uses a Congestion Control Mechanism. There are several known Congestion Control Mechanisms, for instance, RENO, CUBIC, HSTCP, and DCTCP.

Upon a packet loss (e.g. caused by too shallow buffers in the network routers, insufficient line quality) or packet reordering (i.e. out-of-order delivery, the order of the packets received at the receiver is different from that which the transmitter generated), the receiver will send an ACK with the latest accepted packet sequence number and a Selective Acknowledgement (SACK) response indicating the subsequent accepted packets. Upon receiving this SACK indication or duplicate ACKs (e.g. three), the TCP transmitter starts using its Congestion Control Mechanism (e.g. AIMD - Additive Increase Multiplicative Decease in legacy implementations, e.g. TCP Reno), and retransmits the missing packets indicated by the combination of the ACK and SACK messages, while reducing its congestion window size to one half of its current size (e.g. in TCP Reno), thereby also reducing its transmitting rate by half. After reducing the congestion window size, the transmitter enters a Congestion Avoidance Mechanism. In the Congestion Avoidance Mechanism, the congestion window is increased gradually (namely by one in case of TCP Reno). In case the transmitter does not receive any response until a timeout, the congestion window size drops to a value of 1.

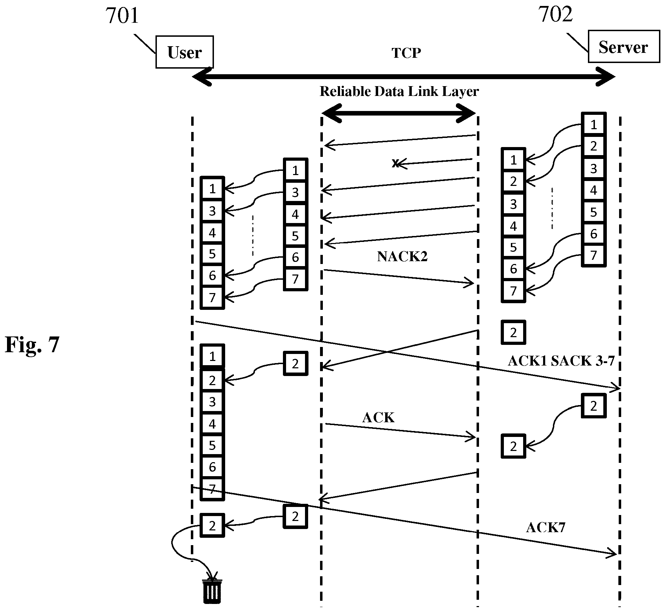

A major problem that exists in the state of the art is the lack of coordination between a conventional TCP and a conventional Reliable ARQ mechanism. This leads to a reduced service performance, due to spurious retransmissions and in case of video delivery (e.g. over Wi-Fi) to a degraded quality of experience. Fig. 7 illustrates a typical scenario that occurs due to the lack of any coordination between the two reliable layers.

In Fig. 7, it is assumed that a server 702 intends to send a window of 7 datagrams to a user 701. A reliable data link layer, for example 802.11ac Wi-Fi MAC, uses to this end an aggregation size of 7 datagrams, and starts sending the aggregated frame over an air interface. Further, it is assumed that thereby datagram 2 is lost, for instance, due to air interference.

The user datalink layer, for example 802.11ac Wi-Fi MAC, thus sends a No or Negative Acknowledgement (NACK) message to the sender MAC layer, particularly a NACK2 indication. Additionally, when a TCP client on the user side receives the datagrams with the datagram 2 missing, it sends ACK1 with SACK 3-7 messages, to the server 702.

Meanwhile, the reliable data link layer enters a retry mode, and sends the missing datagram 2 over the air interface again. Additionally, when the server 702 receives the ACK1 and SACK 3-7 messages, it activates its Congestion Control Mechanism, for example half the window size, and also sends again the missing datagram.

In the meantime, the user data link layer receives the missing datagram sent because of the retry mode of the reliable data link layer, and accordingly sends an ACK to the sender. Eventually, also the receiver TCP stack gets the missing datagram sent because of the retry mode of the reliable data link layer, and accordingly sends ACK7 to the server 702.

However, the reliable data link layer receives datagram 2 also from the server 702, due to its Congestion Control Mechanism, and accordingly transmits it over the air interface to the user 701. The user 701 thus gets the datagram 2 again, and accordingly discards it, since it has already received and transferred it to the application.

As illustrated in Fig. 7, on the one hand the server 702 has thus reduced its rate drastically, and also unnecessarily, which directly influences the user Quality of Experience (QoE). On the other hand it has also retransmitted the lost datagram 2 unnecessarily, and thus cause inefficient utilization of the network infrastructure.

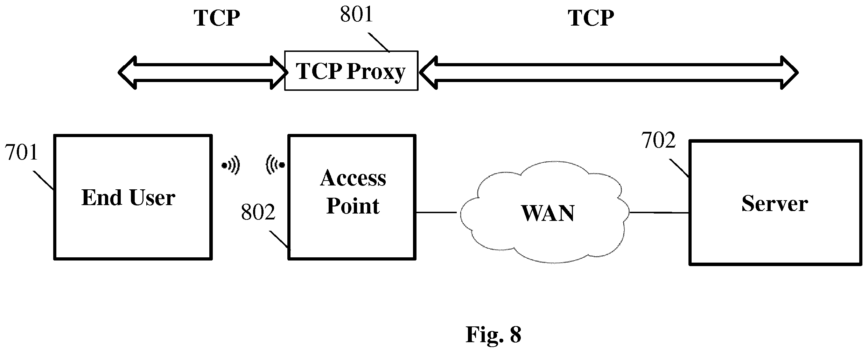

Conventionally, the above-shown problem is addressed by separating the reliable data link layer domain from the wired domain in the demarcation point, for example in an 802.11ac Wi-Fi Access Point. To this end - as is shown in Fig. 8 - a TCP Proxy 801 is conventionally implemented in the demarcation point, so that it separates the wireless domain from the fixed wired domain.

The main disadvantages of using such a TCP Proxy 801 are, however, that an ACK received by the server 702 is not an ACK from the end user (Mobile Host) 701. Further, high memory utilization is required, since packets received from the server 702 need to be stored in the demarcation point. Also a high CPU utilization is required, since two TCP connections have to be handled in the demarcation point, one towards the server 702 and the other one towards the end user 701. Finally, there are severe security concerns, due to the breaking of the TCP connection. This causes the need to mitigate security threats, which also contributes to additional memory and CPU utilization.

US 2005/068896 A1 discloses a system and method for transmission control protocol (TCP) acceleration. Incoming acknowledgement (ACK) packets belonging to a TCP session are received, and an upstream queue is searched for queued acknowledgment packets belonging to the same TCP session. If the incoming acknowledgment packet is not a duplicate of the queued acknowledgment packet, one of the queued acknowledgment packets is replaced with the incoming acknowledgment packet in the position in the upstream queue occupied by the oldest of the queued acknowledgment packets. After the oldest queued acknowledgement packet is replaced, remaining acknowledgement packets in the queue are dropped.

US 6 553 032 B1 discloses a method and apparatus to prevent unnecessary execution of TCP/IP performance enhancing algorithms in a wireless communications network. The method includes monitoring acknowledgment message traffic between a sending unit and a receiving unit and preventing forwarding of an acknowledgment message to the sending unit when the acknowledgment message is a second duplicate acknowledgment message. The apparatus includes a first endpoint unit connected between a sending unit and a receiving unit. The first endpoint unit includes a monitor component to monitor acknowledgment message traffic between the sending unit and the receiving unit and a filter unit to prevent forwarding of a duplicate acknowledgment message to the sending unit until a predefined condition is met.

SUMMARY

In view of the above-mentioned disadvantages, the present invention aims towards overcoming the lack of coordination between conventional TCP and Reliable ARQ mechanism in an improved manner, in particular without the use of a TCP Proxy. Thereby, the present invention has the object to coordinate the TCP and Reliable ARQ mechanisms without the need for high memory utilization and CPU utilization, and without the need to mitigate security threats. Also, an ACK received by the server should be one from the end user.

The object of the present invention is achieved by the solution provided in the enclosed independent claims. Advantageous implementations of the present invention are further defined in the dependent claims.

In particular, the present invention introduces a TCP monitoring device and method, the device being preferably located in the demarcation point between a TCP domain over a reliable data link layer domain and a wired TCP domain. The device and method make use of the knowledge that ARQ is used in the data link layer. The TCP connection and user responses are monitored. Upon a SACK message detection, the response is simply delayed, which bases on the assumption that the data link layer will eventually succeed in retransmitting a lost packet during that time.

A first aspect of the present invention provides a method for monitoring a Transmission Control Protocol, TCP, connection between a transmitting device and a receiving device, wherein the transmitting device sends a plurality of packets to the receiving device through a monitoring device, the method comprises the steps of detecting, at the monitoring device, a Selective Acknowledgement, SACK, message sent via the TCP connection from the receiving device to the transmitting device; storing, at the monitoring device, the detected SACK message for a pre-determined or defined time period; detecting, at the monitoring device, an acknowledgement, ACK, message sent from the receiving device to the transmitting device; and discarding, at the monitoring device, the stored SACK message when determining that the detected ACK message is correlated with the stored SACK message according to sequence numbers of the detected ACK message and the stored SACK message, wherein the detected ACK message is correlated with the stored SACK message if the sequence number of the detected ACK message is equal or greater than the sequence number of the stored SACK message, providing the detected SACK message with a time stamp; recording a time of detection of the ACK message that correlated with the detected SACK message; and updating the pre-determined time period for a next circle based on a currently real time period, wherein the currently real time period is a time period between the recorded time of detection of the ACK message and the time stamp of the correlated SACK message.

Therefore, if a correlated ACK message is detected in the pre-determined time period, the stored SACK message can be deleted and is not sent to the transmitting device, e.g. a server. Accordingly, the transmitting device does not retransmit a datagram again, for which already an ACK message was received, for instance, because of a retry mode of a reliable data link layer. Thus, the device coordinates a TCP and Reliable ARQ mechanism in an improved manner, in particular without requiring a TCP Proxy. The device does also not inefficiently utilize the network infrastructure, since lost datagrams are not resent more often than necessary. Further, since the TCP connection is not broken, there is not the increased need to mitigate security threats.

In an implementation from of the first aspect, the method is further configured transmit to the transmitting device, and then to discard the stored SACK message after the pre-determined time period is expired, when no ACK message is detected to correlate with the stored SACK message in the pre-determined time period.

Thus, if no correlated ACK message is detected to correlate with the stored SACK message in the pre-determined time period, the datagram can be retransmitted, for instance, by a Congestion Control Mechanism of the transmitting device, to realize the ARQ mechanism.

Thus, comparing with the sequence number of the two messages provides an easier way to determine whether the stored SACK message is correlated with the detected ACK message.

In a further implementation form of the first aspect, the method is further configured to update the pre-determined time period recursively using time series analysis.

By updating and thus optimizing the pre-determined time period, stable data flow and optimized network infrastructure utilization are achieved.

In a further implementation form of the first aspect, the method is further configured to update the pre-determined time period for the next circle based on the currently real time period and an error of forecasting the time of detection of the ACK message.

In a further implementation form of the first aspect, the method is further configured to update the pre-determined time period based on the sum of the measured time period and a prediction error that occurred in the previous update to the currently pre-determined time period.

The above implementation forms allow for accurate and efficient updating of the pre-determined time period.

In a further implementation form of the first aspect, the device is further configured to multiply the prediction error by a smoothing factor, wherein the smoothing factor is preferably between 0 and 1, more preferably between 0.05 and 0.7 and is most preferably about 0.1.

The smoothing factor prevents the pre-determined time period to change too rapidly from one value to the other, thus enabling a smooth but efficient operation of the device.

In a further implementation form of the first aspect, the pre-determined time period upon system start up is in the range of about 5-15ms, more preferably about 7-12ms and is most preferably about 10ms.

This pre-determined time period allows the device to efficiently work already from start up.

A second aspect of the present invention provides a device for monitoring a Transmission Control Protocol, TCP, connection between a transmitting device and a receiving device, comprising a detecting unit, configured to detect a Selective Acknowledgement, SACK, message and an Acknowledgement, ACK message sent via the TCP connection from the receiving device to the transmitting device, a storing unit, configured to store the detected SACK message for a pre-determined time period; a correlation determining unit, configured to determine, whether the detected ACK message is correlated to the stored SACK message, and a processing unit, configured to discard the stored SACK message when determining that the stored SACK message is correlated with the detected ACK message according to sequence numbers of the detected ACK message and the stored SACK message, wherein the correlation determining unit is further configured to determine whether the sequence number of the detected ACK message is equal or greater than the sequence number of the stored SACK message, wherein the device is further configured to provide the detected SACK message with a time stamp; record a time of detection of the ACK message that correlated with the detected SACK message; and update the pre-determined time period for a next circle based on a currently real time period, wherein the currently real time period is a time period between the recorded time of detection of the ACK message and the time stamp of the correlated SACK message.

In an implementation from of the second aspect, the processing unit is further configured to transmit to the transmitting device, and then to discard the stored SACK message after the pre-determined time period is expired, when no ACK message is detected to correlate with the stored SACK message in the pre-determined time period clearing, and transmitting to the server, a stored SACK message after the pre-determined time period.

Thus, comparing with the sequence number of the two messages provides an easier way to determine the stored SACK message is correlated with the detected ACK message.

In a further implementation form of the second aspect, the device is further configured to update the pre-determined time period recursively using time series analysis.

In a further implementation form of the second aspect, the device is further configured to update the pre-determined time period for a next circle based on a currently real time period, wherein the currently real time period is a time period between the recorded time of detection of the ACK message and the time stamp of the correlated SACK message.

In a further implementation form of the second aspect, the device is further configured to update the pre-determined time period for the next circle based on sum of the currently real time period and an error of forecasting the time of detection of the ACK message.

In a further implementation form of the second aspect, the device is further configured to multiply the prediction error by a smoothing factor, wherein the smoothing factor is preferably between 0 and 1, more preferably between 0.05 and 0.7 and is most preferably about 0.1.

In a further implementation form of the second aspect, the pre-determined time period upon system start up is in the range of about 5-15ms, more preferably about 7-12ms and is most preferably about 10ms.

In a further implementation form of the second aspect, the device is located at a demarcation point between a TCP domain over a reliable data link layer domain and a wired TCP domain.

In a further implementation form of the second aspect, the device is, or is included in, a mobile E-UTRAN Node B (eNodeB) or Wi-Fi access point.

The second aspect and its implementation forms achieve the same advantages as the first aspect and its implementation forms.

A third aspect of the present invention provides a computer program product comprising a program code for performing, when running on a computer, the method according to the first aspect as such or any of its implementation forms.

The third aspect thus achieves the same advantages as the second aspect and its implementation forms.

A fourth aspect of the present invention provides a TCP transmission system, comprising a transmitting device, a receiving device, and a device according to the second aspect as such or any of its implementation forms.

The fourth aspect thus achieves the same advantages as the second aspect and its implementation forms.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

BRIEF DESCRIPTION OF DRAWINGS

The above described aspects and implementation forms of the present invention will be explained in the following description of specific embodiments in relation to the enclosed drawings, in which

Fig. 1    shows a device according to an embodiment of the present invention, which is configured to carry out a method according to an embodiment of the present invention.

Fig. 2    shows a block diagram of a Wi-Fi Access Point.

Fig. 3    shows a device according to an embodiment of the present invention.

Fig. 4    shows a method according to an embodiment of the present invention.

Fig. 5    shows a flow diagram of a method according to an embodiment of the present invention.

Fig. 6    shows a flow diagram of a method according to an embodiment of the present invention.

Fig. 7    shows a flow diagram of a conventional method.

Fig. 8    shows a conventional solution with TCP Proxy.

DETAILED DESCRIPTION OF EMBODIMENTS

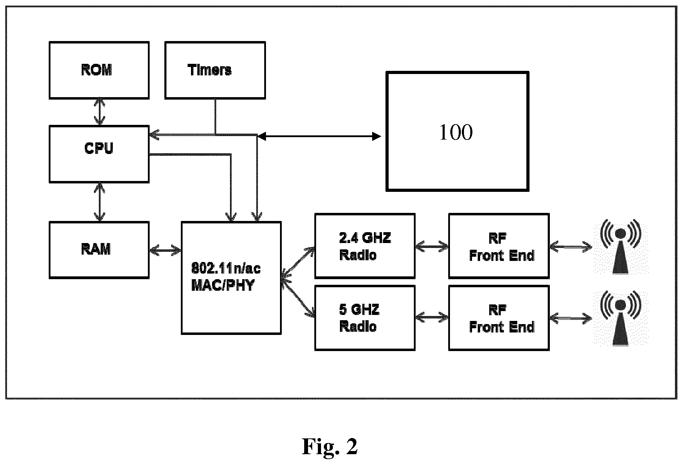

The present invention in general proposes a TCP monitoring device 100, which is preferably located in a demarcation point between a TCP domain over a reliable data link layer domain and a wired TCP domain, and thereby is, or is included in, a mobile Evolved Universal Terrestrial Radio Access Network (E-UTRAN Node B, or eNodeB) or a Wi-Fi access point. A schematic block diagram of an 802.11n/ac Wi-Fi Access Point, which acts as the device 100, or in which the device 100 may be located, is shown in Fig. 2.

The operation of the device 100 bases on a priori knowledge of the reliable data link layer. The device 100 accordingly monitors the TCP connection, intercepts and delays SACK messages from a user, whereby it assumes that the reliable data link layer will succeed to retransmit the missing datagrams eventually. The proposed device ensures stable data flow (stable QoE in case of Video Service), and an optimized network infrastructure utilization.

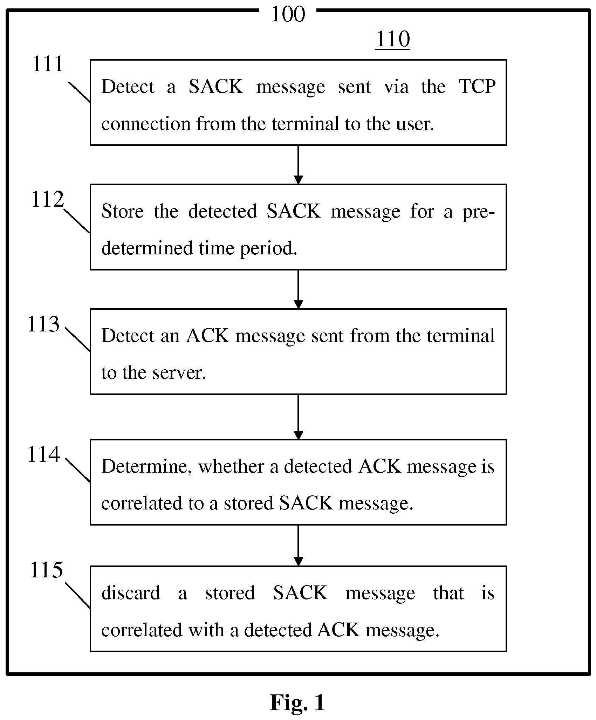

Specifically, Fig. 1 shows the device 100 according to an embodiment of the present invention. The device 100 is configured to monitor a TCP connection between a transmitting device, (e.g. a server 502 in figure. 1) and a receiving device, (e.g. a terminal 501 in figure. 1). Thereby, the device 100 is configured to carry out a method 110 according to an embodiment of the present invention. According to this method 110, the device 100 is configured to detect 111 a Selective Acknowledgement, SACK messages sent via the TCP connection from the terminal 501 to the server 502. Further, it is configured to store 112 the detected SACK message for a pre-determined time period, to detect 113 an acknowledgement, ACK, message sent from the terminal 501 to the server 502, to determine 114, whether the detected ACK message is correlated with the stored SACK message, and to discard (or clear) 115 the stored SACK message that is correlated with a detected ACK message according to sequence numbers of the detected ACK message and the stored SACK message.

When implementing the embodiment of the invention, the device 100 will monitor a plurality of TCP connections simultaneously, so the device 100 distinguishes each TCP connection to which detected messages (e.g. SACK message, ACK message) belongs based on the identifiers of the connection, e.g. source address, source port, destination address, destination port.

Further, after the pre-determined time period is expired, and no ACK message is detected to correlate with the stored SACK message during the pre-determined time period, the device 100 is configured to discard (or clear) after transmitting the stored SACK message to the server 502.

The detected ACK message is correlated with the stored SACK message by determining the sequence number of the detected ACK message is equal or greater than the sequence number of the stored SACK message. That is, each message in the TCP connection is labeled with a sequence number, the correlation between the detected ACK message and the stored SACK message is determined by comparing the sequence numbers of the detected ACK message and the stored SACK message.

The amount of time required for the delay, i.e. the pre-determined time period, may be adaptively be updated/estimated by using, for instance, a time series analysis. Preferably, the estimation of the pre-determined time period uses an exponential moving average, wherein it is preferably estimated according to the below formulas:

$$S_{t+1} = S_t + \alpha \varepsilon_t$$

$$0 < \alpha < 1, t > 0$$

Here, a new pre-determined time period (delay) is forecast based on an old observed delay plus an adjustment for the error, which occurred in the last forecast ($\varepsilon_t$ is the forecast error actual delay - forecast delay at time t). Upon system startup, an initial pre-determined time period value of about 5-15ms, for example, of 10ms may be assumed, which may then be updated according to the real measurements. Further, a smoothing factor $\alpha$ may be chosen, in order to smooth the updating process of the pre-determined time period, for example, between 0 and 1, preferably of about 0.1.

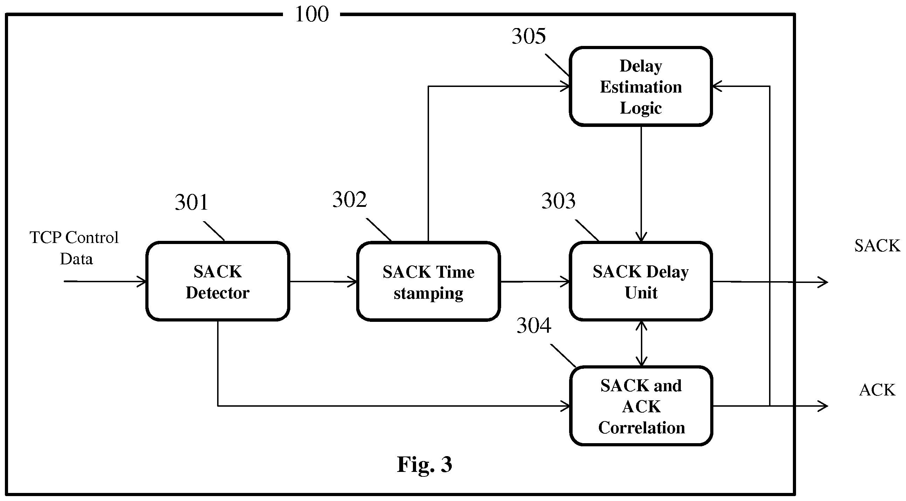

The device 100 according to the embodiment of Fig. 1 may include the following components, as shown in detail in Fig. 3.

A SACK Detector 301: This unit may be configured to monitor the TCP control flow for ACK and SACK messages from the receiving device, (e.g. a user terminal 501) to the transmitting device, (e.g. a server 502), which acts as a detecting unit of the device 100. Upon a SACK detection, it may be configured to store the duplicate SACK in, for instance, a memory of a SACK Delay Unit 303, which acts as a storing unit of the device 100. Also, this unit may be configured to clear the SACK memory upon a clearing ACK detection, which acts as a processing unit of the device 100.

SACK Time Stamping 302: This unit may be configured to attach a time stamp to the arriving SACK message.

A SACK Delay Unit 303: This unit may be, for example, a memory for storing SACK messages for the pre-determined time period by monitoring a timer. Upon timer expiration, it may be configured to transmit the SACK message to the sever 502.

SACK and ACK Correlation 304: This unit may be configured to correlate each ACK message to delayed SACK messages stored in, for example, the memory of the SACK Delay Unit 303. The detected ACK message is correlated with the stored SACK message by determining that the sequence number of the detected ACK message is equal or greater than the sequence number of the stored SACK message. Further, it may be configured to record the time upon detection of an ACK message, which cleared a stored SACK message. Further, it may be configured to transfer the time of clearing of the ACK message to a Delay Estimation Logic 305.

Delay Estimation Logic 305: This unit may be configured to predict and update the SACK delay time based on, for example, history measurements. For instance, the unit may update the pre-determined time period based on the recorded time of detection of an ACK message. Specifically, if a time stamp was attached to a correlated SACK message, it may update the pre-determined time period based on a measured time period between the recorded time of detection of the ACK message and the time stamp of the correlated SACK message. The unit may carry out the updating of the pre-determined time period according to a time series prediction based on the measured time period. For instance, it may update the pre-determined time period based on the sum of the measured time period and a prediction error that occurred in the previous update to the currently pre-determined time period.

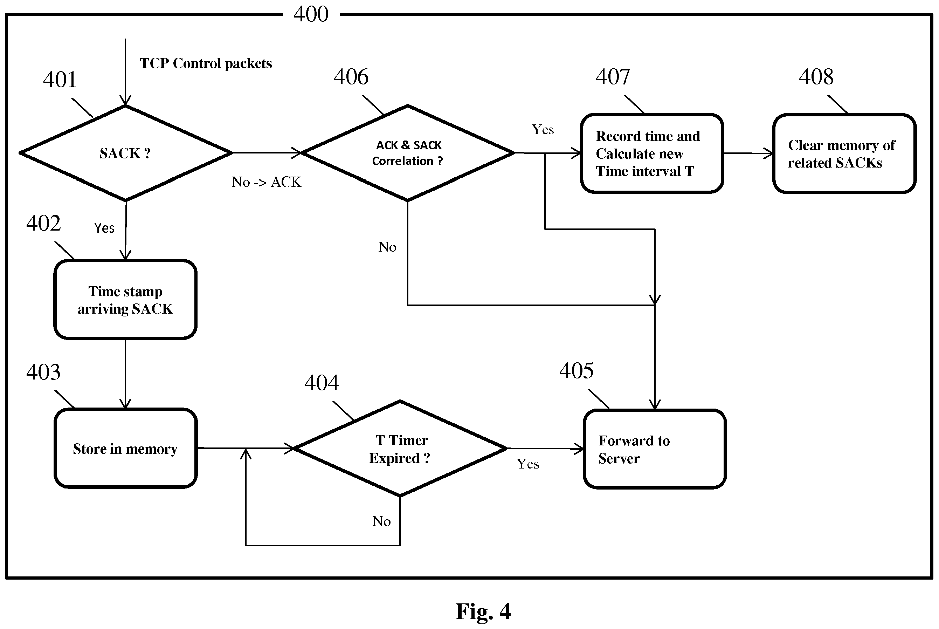

The flow diagram in Fig. 4 describes the method 110 carried out in device 100 in more detail.

Arriving responses from a terminal 501 are monitored at block 401. In case of a SACK response, the SACK message may be time stamped at block 402, and is stored in block 403, for example by using a memory, for a pre-determined time period T, which is regularly estimated and updated by an algorithm.

Upon expiration of the pre-determined time period at block 404, i.e. after a timer corresponding to time T expired, the SACK message is forwarded at block 405 to the server 502. In case that the data link layer has succeeded in retransmitting a missing datagram, this leads to an ACK response. The ACK is captured at block 401, and is analysed at block 406 to verify, if it correlates with and clears the stored SACK message. In case it does, the time stamp of the ACK arrival is saved at block 407, and is preferably used to estimate at block 407 the next delay timer, i.e. an updated pre-determined time period. The SACK message is also cleared from the memory at block 408, and the ACK is forwarded at block 405 to the server 502.

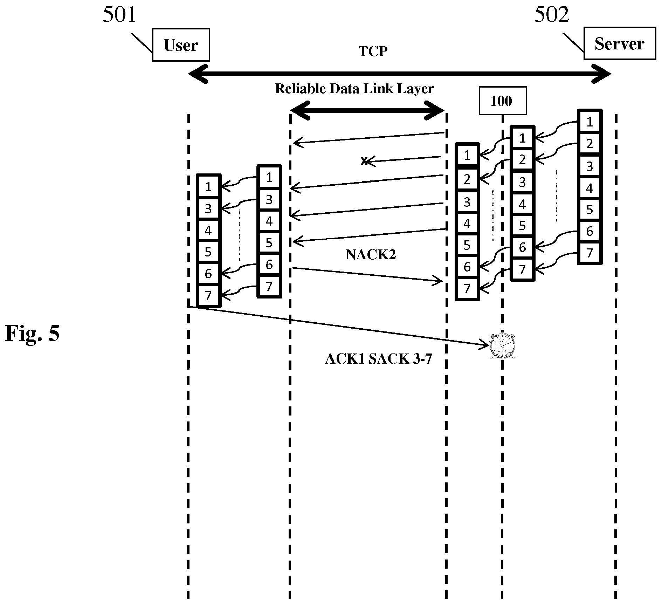

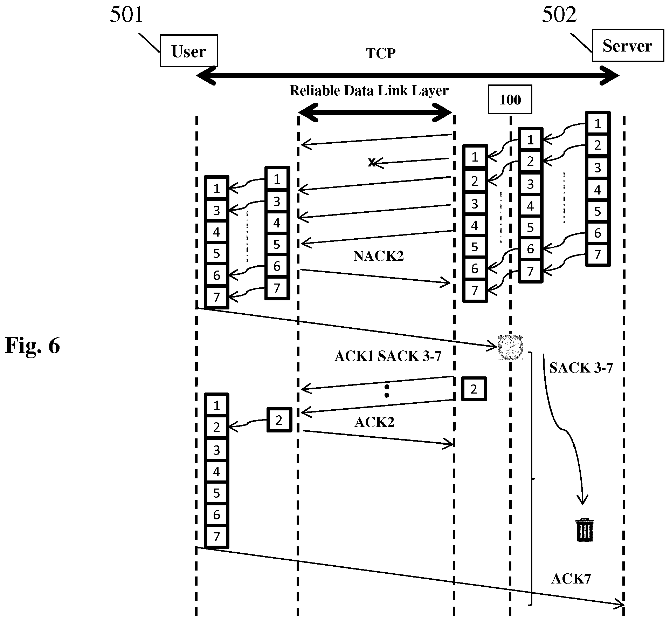

Figs. 5 and 6 show a scenario, where the currently pre-determined time period T is sufficient. In Fig. 5, it is assumed that the server 502 intends to send a window of 7 datagrams to the user 501. The data link layer, for example a 802.11ac Wi-Fi MAC, accordingly uses an aggregation size of 7 datagrams, and starts sending the aggregated frame over an air interface. Thereby, it is further assumed that datagram 2 is lost, for instance, due to air interference.

The user datalink layer, for example 802.11ac Wi-Fi MAC, accordingly sends a NACK2 indication to the sender MAC layer. Additionally, a TCP client on the user side receives the datagrams, wherein datagram 2 is missing, and accordingly sends ACK1, SACK 3-7 messages to the server 502.

As shown in Fig. 5, the device 100 for monitoring the TCP connection according to an embodiment of the present invention - which resides in the demarcation point between the TCP domain over the reliable data link layer domain and the wired TCP domain, for example, in an 802.11ac Wi-Fi Access Point - intercepts the SACK message (as in block 401). The device 100 may here add a time stamp to the SACK message (as in block 402). The device 100 may specifically save the SACK message in a memory (as in block 403), in order to delay it for a pre-determined time period T, preferably in the order of milliseconds (as in block 404).

As further shown in Fig. 6, the data link layer residing in the demarcation point now retransmits the lost datagram 2, for instance, because of its retry mode. When the user datalink layer receives the lost datagram, it accordingly sends an ACK2 indication to the sender MAC layer. Eventually, also the receiver TCP stack gets the missing datagram, and accordingly sends ACK7 to the server 502.

The device 100 intercepts this ACK7 message (as in block 401), and checks, if the intercepted ACK7 correlates with the SACK3-7 message (as described in block 406). When comparing the sequence number of the detected ACK message (i.e. 7) and the sequence number of the stored SACK message (i.e. 3-7), and identifying that the former (i.e. 7) is equal to and greater than the latter (i.e. 3-7), it is determined that the detected ACK message (i.e. ACK7 message) and the stored SACK message (i.e. SACK3-7 message) are correlated. In case that the ACK7 correlates with the SACK3-7 message, a timestamp is produced and recorded (as in block 407), and a new pre-determined time period is estimated and updated. Then, the device 100 clears the pending SACK3-7 message, and resets the timer (as in block 408). Finally, the device 100 sends the ACK7 message further to the server 502 (as in block 405).

Therefore, the SACK3-7 message never reaches the server 502, which accordingly does not start retransmitting the lost diagram 2 to the user 501, which would be redundant. Accordingly, the network infrastructure is not inefficiently utilized. Further, the server 502 receives an ACK (ACK7) sent by the user 501. The device 100 is not a TCP Proxy, which divides the TCP connection, and thus does not bring the above-described disadvantages of such a TCP Proxy. In summary, the device 100 of the present invention overcomes the lack of coordination between conventional TCP and Reliable ARQ mechanism in an improved manner.

The present invention has been described in conjunction with various embodiments as examples as well as implementations. In the claims as well as in the description the word "comprising" does not exclude other elements or steps and the indefinite article "a" or "an" does not exclude a plurality. A single element or other unit may fulfil the functions of several entities or items recited in the claims. The scope of protection is defined by the appended set of claims.

## Claims

1. A method (no) for monitoring a Transmission Control Protocol, TCP, connection between a transmitting device and a receiving device, wherein the transmitting device sends a plurality of packets to the receiving device through a monitoring device (100), the method (110) comprising:

   detecting (111), at the monitoring device (100), a Selective Acknowledgement, SACK, message sent via the TCP connection from the receiving device to the transmitting device;
   storing (112), at the monitoring device (100), the detected SACK message for a pre-determined time period in order to be transmitted to the transmitting device after the pre determined time period has expired:

   detecting (113), at the monitoring device (100), an acknowledgement, ACK, message sent from the receiving device to the transmitting device; and

discarding (115), at the monitoring device (100), the stored SACK message when determining (114) that the detected ACK message is correlated with the stored SACK message according to sequence numbers of the detected ACK message and the stored SACK message, wherein the detected ACK message is correlated with the stored SACK message if the sequence number of the detected ACK message is equal or greater than the sequence number of the stored SACK message, wherein the method further comprises:

>providing the detected SACK message with a time stamp;
>recording a time of detection of the ACK message that correlated with the detected SACK message; and
>updating the pre-determined time period for a next circle based on a currently real time period, wherein the currently real time period is the time period between the recorded
>time of detection of the ACK message and the time stamp of the correlated SACK message.

2. The method (110) according to claim 1, further comprising:
transmitting to the transmitting device (100) and then discarding the stored SACK message after the pre-determined time period has expired, when no ACK message is detected to correlate with the stored SACK message in the pre-determined time period.

3. The method (110) according to claim 1 or 2, the pre-determined time period is recursively updated using time series analysis.

4. The method (110) according to claim 1, further comprising:
updating the pre-determined time period for the next circle based on sum of the currently real time period and an error of forecasting the time of detection of the ACK message.

5. The method (110) according to claim 4, further comprising:
multiplying the error of forecasting by a smoothing factor, wherein the smoothing factor is preferably between 0 and 1 and is most preferably about 0.1.

6. A device (100) for monitoring a Transmission Control Protocol, TCP, connection between a transmitting device (100) and a receiving device (100), comprising:

>a detecting unit, configured to detect a Selective Acknowledge, SACK, message and an acknowledgement, ACK, message sent via the TCP connection from the receiving device (100) to the transmitting device (100),
>a storing unit, configured to store the detected SACK message for a pre-determined time period in order to be transmitted to the transmitting device after the pre-determined time period has expired,
>a correlation (304) determining unit, configured to determine, whether the detected ACK message is correlated to the stored SACK message, and
>a processing unit, configured to discard the stored SACK message when determining that the stored SACK message is correlated with the detected ACK message according to sequence numbers of the detected ACK message and the stored SACK message,
>wherein the correlation (304) determining unit is further configured to determine whether the sequence number of the detected ACK message is equal or greater than the sequence number of the stored SACK message,
>wherein the device is further configured to provide the detected SACK message with a time stamp; record a time of detection of the ACK message that correlated with the detected SACK message; and update the pre-determined time period for a next circle based on a currently real time period, wherein the currently real time period is the time
>period between the recorded time of detection of the ACK message and the time stamp of the correlated SACK message.

7. The device (100) according to claim 6, the processing unit, further configured to:
transmit to the transmitting device (100) and then discard the stored SACK message after the pre-determined time period has expired, when no ACK message is detected to correlate with the stored SACK message in the pre-determined time period.

8. The device (100) according to claim 6 or 7, further comprising:
a time period estimation unit, configured to update the pre-determined time period recursively using time series analysis.

9. The device (100) according to any one of the claims 6 to 8, wherein
the device (100) is located in a demarcation point between a wireless reliable data link layer domain and a wired TCP domain.

**10.** The device (100) according to any one of the claims 6 to 9, wherein
the device (100) is, or is included in, a mobile eNodeB or Wi-Fi access point.

**11.** A TCP transmission system, comprising: a transmitting device (100), a receiving device (100), and a device (100) according to any one of claims 6 to 10.

**12.** Computer program product comprising a program code for performing, when running on a computer, the method (110) according to any one of claims 1 to 5.

**Patentansprüche**

**1.** Verfahren (110) zum Überwachen einer Übertragungssteuerprotokollverbindung, TCP-Verbindung, zwischen einer Sendevorrichtung und einer Empfangsvorrichtung, wobei die Sendevorrichtung mehrere Pakete durch eine Überwachungsvorrichtung (100) an die Empfangsvorrichtung sendet, wobei das Verfahren (110) Folgendes umfasst:

Detektieren (111) bei der Überwachungsvorrichtung (100) einer selektiven Bestätigungsnachricht, SACK-Nachricht, die über die TCP-Verbindung von der Empfangsvorrichtung an die Sendevorrichtung gesendet wird;
Speichern (112) bei der Überwachungsvorrichtung (100) der detektierten SACK-Nachricht für eine vorgegebene Zeitperiode, um an die Sendevorrichtung gesendet zu werden, nachdem die vorgegebene Zeitperiode abgelaufen ist:

Detektieren (113) bei der Überwachungsvorrichtung (100) einer Bestätigungsnachricht, ACK-Nachricht, die von der Empfangsvorrichtung an die Sendevorrichtung gesendet wird; und
Verwerfen (115) bei der Überwachungsvorrichtung (100) der gespeicherten SACK-Nachricht, wenn bestimmt wird (114), dass die detektierte ACK-Nachricht mit der gespeicherten SACK-Nachricht gemäß Folgennummern der detektierten ACK-Nachricht und der gespeicherten SACK-Nachricht korreliert ist, wobei die detektierte ACK-Nachricht mit der gespeicherten SACK-Nachricht korreliert ist, wenn die Folgennummer der detektierten ACK-Nachricht gleich oder größer als die Folgennummer der gespeicherten SACK-Nachricht ist, wobei das Verfahren ferner Folgendes umfasst:

Ausstatten der detektierten SACK-Nachricht mit einem Zeitstempel;
Aufzeichnen einer Detektionszeit der ACK-Nachricht, die mit der detektierten SACK-Nachricht korreliert ist; und
Aktualisieren der vorgegebenen Zeitperiode für einen nächsten Zyklus anhand einer aktuellen Echtzeitperiode, wobei die aktuelle Echtzeitperiode die Zeitperiode zwischen der aufgezeichneten Detektionszeit der ACK-Nachricht und dem Zeitstempel der korrelierten SACK-Nachricht ist.

**2.** Verfahren (110) nach Anspruch 1, das ferner Folgendes umfasst:
Senden an die Sendevorrichtung (100) und dann Verwerfen der gespeicherten SACK-Nachricht, nachdem die vorgegebene Zeitperiode abgelaufen ist, wenn in der vorgegebenen Zeitperiode detektiert wird, dass keine ACK-Nachricht mit der gespeicherten SACK-Nachricht korreliert.

**3.** Verfahren (110) nach Anspruch 1 oder 2, wobei die vorgegebene Zeitperiode unter Verwendung einer Zeitreihenanalyse rekursiv aktualisiert wird.

**4.** Verfahren (110) nach Anspruch 1, das ferner Folgendes umfasst:
Aktualisieren der vorgegebenen Zeitperiode für den nächsten Zyklus anhand der Summe der aktuellen Echtzeitperiode und einem Fehler einer Vorhersage der Detektionszeit der ACK-Nachricht.

**5.** Verfahren (110) nach Anspruch 4, das ferner Folgendes umfasst:
Multiplizieren des Fehlers der Vorhersage mit einem Glättungsfaktor, wobei der Glättungsfaktor vorzugsweise zwischen 0 und 1 ist und am meisten bevorzugt ungefähr 0,1 ist.

**6.** Vorrichtung (100) zum Überwachen einer Übertragungssteuerprotokollverbindung, TCP-Verbindung, zwischen einer Sendevorrichtung (100) und einer Empfangsvorrichtung (100), die Folgendes umfasst:

eine Detektionseinheit, die konfiguriert ist, eine selektive Bestätigungsnachricht, SACK-Nachricht, und eine Bestätigungsnachricht, ACK-Nachricht, die über die TCP-Verbindung von der Empfangsvorrichtung (100) an die Sendevorrichtung (100) gesendet werden, zu detektieren, eine Speichereinheit, die konfiguriert ist, die detektierte SACK-Nachricht für eine vorgegebene Zeitperiode zu speichern, um an die Sendevorrichtung gesendet zu werden, nachdem die vorgegebene Zeitperiode abgelaufen ist, eine Korrelationsbestimmungseinheit (304), die konfiguriert ist, zu bestimmen, ob die detektierte ACK-Nachricht mit der gespeicherten SACK-Nachricht korreliert ist, und eine Verarbeitungseinheit, die konfiguriert ist, die gespeicherte SACK-Nachricht zu verwerfen, wenn bestimmt wird, dass die gespeicherte SACK-Nachricht gemäß Folgennummern der detektierten ACK-Nachricht und der gespeicherten SACK-Nachricht mit der detektierten ACK-Nachricht korreliert ist,

wobei die Korrelationsbestimmungseinheit (304) ferner konfiguriert ist, zu bestimmen, ob die Folgennummer der detektierten ACK-Nachricht gleich oder größer als die Folgennummer der gespeicherten SACK-Nachricht ist,

wobei die Vorrichtung ferner konfiguriert ist, die detektierte SACK-Nachricht mit einem Zeitstempel auszustatten; eine Detektionszeit der ACK-Nachricht, die mit der detektierten SACK-Nachricht korreliert ist, aufzuzeichnen; und die vorgegebene Zeitperiode für einen nächsten Zyklus anhand einer aktuellen Echtzeitperiode zu aktualisieren, wobei die aktuelle Echtzeitperiode die Zeitperiode zwischen der aufgezeichneten Detektionszeit der ACK-Nachricht und dem Zeitstempel der korrelierten SACK-Nachricht ist.

**7.** Vorrichtung (100) nach Anspruch 6, wobei die Verarbeitungseinheit ferner konfiguriert ist zum:
Senden an die Sendevorrichtung (100) und dann Verwerfen der gespeicherten SACK-Nachricht, nachdem die vorgegebene Zeitperiode abgelaufen ist, wenn in der vorgegebenen Zeitperiode detektiert wird, dass keine ACK-Nachricht mit der gespeicherten SACK-Nachricht korreliert.

**8.** Vorrichtung (100) nach Anspruch 6 oder 7, die ferner Folgendes umfasst:
eine Zeitperiodenschätzeinheit, die konfiguriert ist, die vorgegebene Zeitperiode unter Verwendung einer Zeitreihenanalyse rekursiv zu aktualisieren.

**9.** Vorrichtung (100) nach einem der Ansprüche 6 bis 8, wobei
sich die Vorrichtung (100) in einem Demarkationspunkt zwischen einem Bereich einer drahtlosen zuverlässigen Datenverbindungsschicht und einem verdrahteten TCP-Bereich befindet.

**10.** Vorrichtung (100) nach einem der Ansprüche 6 bis 9, wobei
die Vorrichtung (100) ein mobiler eNodeB oder Wi-Fi-Zugangspunkt ist oder darin enthalten ist.

**11.** TCP-Übertragungssystem, das Folgendes umfasst:
eine Sendevorrichtung (100), eine Empfangsvorrichtung (100) und eine Vorrichtung (100) nach einem der Ansprüche 6 bis 10.

**12.** Computerprogrammprodukt, das einen Programmcode umfasst, um dann, wenn es auf einem Computer läuft, das Verfahren (110) nach einem der Ansprüche 1 bis 5 auszuführen.

**Revendications**

**1.** Procédé (110) de surveillance d'une connexion sous protocole de commande de transmission, noté TCP, entre un dispositif émetteur et un dispositif récepteur, le dispositif émetteur envoyant une pluralité de paquets au dispositif récepteur par le biais d'un dispositif de surveillance (100), le procédé (110) comprenant :

la détection (111), au niveau du dispositif de surveillance (100), d'un message d'acquittement sélectif, noté SACK, envoyé via la connexion TCP depuis le dispositif récepteur jusqu'au dispositif émetteur ;
le stockage (112), au niveau du dispositif de surveillance (100), du message SACK détecté pendant un laps de temps prédéterminé afin de le transmettre au dispositif émetteur après expiration du laps de temps prédéterminé ;
la détection (113), au niveau du dispositif de surveillance (100), d'un message d'acquittement, noté ACK, envoyé depuis le dispositif récepteur jusqu'au dispositif émetteur ; et
la mise à l'écart (115), au niveau du dispositif de surveillance (100), du message SACK stocké lors de la détermination (114) que le message ACK détecté est corrélé avec le message SACK stocké selon des numéros de séquence du message ACK détecté et du message SACK stocké, le message ACK détecté étant corrélé avec le message SACK stocké si le numéro de séquence du message ACK détecté est supérieur ou égal au numéro de séquence du message SACK stocké, le procédé comprenant en outre :

l'attribution d'une estampille temporelle au message SACK détecté ;
la consignation d'un temps de détection du message ACK qui est corrélé avec le message SACK détecté ; et
la mise à jour du laps de temps prédéterminé pour un prochain cycle sur la base d'un laps de temps réel en cours, le laps de temps réel en cours étant le laps de temps entre le temps de détection consigné du message ACK et l'estampille temporelle du message SACK corrélé.

**2.** Procédé (110) selon la revendication 1, comprenant en outre :
la transmission au dispositif émetteur (100) puis la mise à l'écart du message SACK stocké après expiration du laps de temps prédéterminé, lorsqu'aucun message ACK n'est détecté pour se corréler au message SACK stocké dans le laps de temps prédéterminé.

3. Procédé (110) selon la revendication 1 ou 2, le laps de temps prédéterminé étant mis à jour de manière récursive au moyen d'une analyse de séries chronologiques.

4. Procédé (110) selon la revendication 1, comprenant en outre :
la mise à jour du laps de temps prédéterminé pour le prochain cycle sur la base d'une somme du laps de temps réel en cours et d'une erreur de prévision du temps de détection du message ACK.

5. Procédé (110) selon la revendication 4, comprenant en outre :
la multiplication de l'erreur de prévision par un facteur de lissage, le facteur de lissage étant de préférence compris entre 0 et 1 et étant le plus préférablement d'environ 0,1.

6. Dispositif (100) de surveillance d'une connexion sous protocole de commande de transmission, noté TCP, entre un dispositif émetteur (100) et un dispositif récepteur (100), comprenant :

une unité de détection, configurée pour détecter un message d'acquittement sélectif, noté SACK, et un message d'acquittement, noté ACK, envoyés via la connexion TCP depuis le dispositif récepteur (100) jusqu'au dispositif émetteur (100),
une unité de stockage, configurée pour stocker le message SACK détecté pendant un laps de temps prédéterminé afin de le transmettre au dispositif émetteur après expiration du laps de temps prédéterminé,
une unité de détermination de corrélation (304), configurée pour déterminer si le message ACK détecté est ou non corrélé avec le message SACK stocké, et
une unité de traitement, configurée pour mettre à l'écart le message SACK stocké lors de la détermination que le message SACK stocké est corrélé avec le message ACK détecté selon des numéros de séquence du message ACK détecté et du message SACK stocké,
l'unité de détermination de corrélation (304) étant configurée en outre pour déterminer si le numéro de séquence du message ACK détecté est ou non supérieur ou égal au numéro de séquence du message SACK stocké,
le dispositif étant configuré en outre pour attribuer une estampille temporelle au message SACK détecté ; consigner un temps de détection du message ACK qui est corrélé avec le message SACK détecté ; et mettre à jour le laps de temps prédéterminé pour un prochain cycle sur la base d'un laps de temps réel en cours, le laps de temps réel en cours étant le laps de temps entre le temps de détection consigné du message ACK et l'estampille temporelle du message SACK corrélé.

7. Dispositif (100) selon la revendication 6, l'unité de traitement étant configurée en outre pour :
transmettre au dispositif émetteur (100) puis mettre à l'écart le message SACK stocké après expiration du laps de temps prédéterminé, lorsqu'aucun message ACK n'est détecté pour se corréler au message SACK stocké dans le laps de temps prédéterminé.

8. Dispositif (100) selon la revendication 6 ou 7, comprenant en outre :
une unité d'estimation de laps de temps, configurée pour mettre à jour le laps de temps prédéterminé de manière récursive au moyen d'une analyse de séries chronologiques.

9. Dispositif (100) selon l'une quelconque des revendications 6 à 8,
le dispositif (100) se situant à un point de démarcation entre un domaine de couche de liaison de données fiable sans fil et un domaine TCP filaire.

10. Dispositif (100) selon l'une quelconque des revendications 6 à 9,
le dispositif (100) étant, ou étant incorporé dans, un eNodeB mobile ou un point d'accès Wi-Fi.

11. Système de transmission TCP, comprenant : un dispositif émetteur (100), un dispositif récepteur (100) et un dispositif (100) selon l'une quelconque des revendications 6 à 10.

12. Produit-programme d'ordinateur comprenant un code de programme pour réaliser, lorsqu'il s'exécute sur un ordinateur, le procédé (110) selon l'une quelconque des revendications 1 à 5.

110

111 — Detect a SACK message sent via the TCP connection from the terminal to the user.

112 — Store the detected SACK message for a predetermined time period.

113 — Detect an ACK message sent from the terminal to the server.

114 — Determine, whether a detected ACK message is correlated to a stored SACK message.

115 — discard a stored SACK message that is correlated with a detected ACK message.

100

**Fig. 1**

Fig. 2

**Fig. 3**

**Fig. 4**

EP 3 613 164 B1

Fig. 5

**Fig. 6**

EP 3 613 164 B1

701 User

702 Server

TCP

Reliable Data Link Layer

NACK2

ACK1 SACK 3-7

ACK

ACK7

**Fig. 7**

**Fig. 8**

EP 3 613 164 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005068896 A1

- US 6553032 B1